# EUROPEAN PATENT SPECIFICATION

(11) **EP 2 335 975 B1**
(45) Date of publication and mention of the grant of the patent: **07.05.2014**
(21) Application number: 10195100.2
(22) Date of filing: 15.12.2010
(51) Int. Cl.: B60R 3/02

(54) **Foldable platform for vehicles**
Klappbare Plattform für Fahrzeuge
Marchepied pliable pour véhicules

(30) Priority: 17.12.2009 EP 09179595
(43) Date of publication of application: 22.06.2011
(73) Proprietor: Iveco Magirus AG, 89079 Ulm (DE)
(72) Inventor: Fauconnet, Gilles, 38190 Froges (FR); Fitz, Harald, 77948 Friesenheim (DE)
(74) Representative: Borsano, Corrado

(56) References cited:
- EP-A1- 1 698 509
- DE-A1- 3 936 972
- FR-A1- 2 890 348
- US-A- 2 469 321

## Description

The present invention relates to a foldable platform for vehicles, comprising a plate and a pivoting device for pivoting the plate between a retracted position and an unfolded position.

Platforms of the above kind are often used at rescue vehicles in the form of steps, footboards and the like to give access to vehicle compartments and lockers in which rescue equipment is stored. For example such lockers can be located in a lateral portion of a fire engine. When the locker is located at a high position above the ground, accessing the contents of the locker may be difficult. This is especially the case with lockers located above a wheel of the vehicle, because it is difficult for construction-conditioned reasons to locate a step in the area of the wheel housing. Such a platform is described in FR-A-2890348.

Generally this problem can be solved by providing a foldable step under the locker that unfolds a step plate that can easily be entered from the ground. In a stowage position, the step plate is retracted inside a compartment of the vehicle. Only when the step is used in a rescue mission, when the rescue vehicle is stationary, the step plate is unfolded and lowers to be entered by a person. However, the known technical solutions for providing foldable steps are unsatisfactory because they are complicated under cinematic aspects and do not match certain requirements. For example, the unfolding process must be conducted fast and reliably, which is not the case with the known foldable steps.

The access to the rescue equipment or vehicle parts can also be a problem for other reasons. For example, it might be difficult to get a overview over different equipment parts stored in a high position inside a vehicle compartment or to remove heavy parts from a compartment in an overhead position, including the risk that items will fall off the compartment and injure a person standing underneath it.

It is therefore an object of the present invention to provide a foldable platform for a vehicle of the above kind, especially for use in a rescue vehicle, that comprises a simple construction that allows an easy access to a vehicle compartment located in a high position above the ground, especially above a wheel housing. It is a further object of the present invention to provide a foldable platform that can be used as a step and comprises a simple construction that allows a fast unfolding process to give easy access to a vehicle compartment.

These objects are achieved by a foldable platform comprising the features of claim 1.

According to the present invention, the pivoting device for pivoting the plate comprises a rigid arm that is hinged to a structural part of the vehicle, i.e., a console fixed on a super structure of the vehicle. Due to the hinged arrangement, the rigid arm is pivotable around a horizontal axis.

On the rotation axis of the arm, a first pulley is arranged in a fixed position with respect to the vehicle structure. This means that this pulley does not rotate with the arm when the arm performs a turning movement around this axis. At the free end of the arm, i.e. opposite to the first pulley, a second pulley is connected to the plate, being rotatable around a second rotation axis that is arranged parallel to the above mentioned rotation axis of the arm. The first pulley and the second pulley are connected by an endless belt that is conducted over these pulleys.

The retracted position of the plate can be identified with an upright position of the arm in which the plate is stored within a respective vehicle compartment. To reach the unfolded position, the arm can be turned about its rotation axis to reach a generally horizontal position. During this turning movement, the first pulley keeps its rotation position, since it is fixed with respect to the vehicle structure. Meanwhile the endless belt is displaced with respect to the arm and transmits a torque to the second pulley at the end of the arm. This transmission is such that the second pulley keeps its turning position during the pivoting movement of the arm with respect to the first pulley and the vehicle (corresponding to an absolute coordinate system). As the second pulley is connected to the plate, the plate can keep a horizontal position when the arm is turned outwardly. With other words, the first pulley, the second pulley and the endless belt represent a kinematic system to keep the orientation of the plate mainly with respect to an absolute co-ordinate system during its movement from the retracted position to the unfolded position.

According to one preferred embodiment of the present invention, the second pulley is connected to the plate in a fixed manner.

In this embodiment the orientation of the plate exactly keeps the constant turning position of the second pulley, with the effect that the position of the plate can be maintained exactly during the pivoting movement of the rigid arm.

According to another preferred embodiment, the second pulley is connected to the plate rotatable within a limited angular range.

In this embodiment it is possible to deflect the plate to a certain extent with respect to the second pulley to which it is connected. This gives the option to move the plate in a slightly tilted position when desired, for example, to reach a tilted storing position in the retracted position of the pivoting device. When the rigid arm is swinging from the retracted position to the unfolded position, the plate can slide into a horizontal usage position when it slips out of its compartment within the vehicle because of its own weight. A mechanism can be provided at the connection between the second pulley and its rotation axis to limit the angular range for the movement of the plate with respect to the second pulley.

Preferably the second pulley is fitted onto a shaft body being fixed to the plate and comprising a recess on its outer circumferential surface, said recess receiving a spline on an inner circumferential surface of the second pulley, said spline having an angular clearance between different turning positions within said recess, said turning positions defining said angular range for turning the second pulley with respect to the plate.

This embodiment comprises a means for limiting a movement of the plate with respect to the second pulley. It is to be mentioned that this angular range is comparatively small and may only comprise some ten degrees. As described above, the second pulley keeps a constant turning position during the unfolding process performed by the pivoting device. However, because of the clearance that is given to the spline to move within the recess, the plate can move independent from the turning position of the second pulley. For example, one turning position can correspond to the horizontal usage position of the plate that is automatically taken by the plate when moved out of its compartment due to its own weight. Another turning position may correspond to a tilted position of the plate that is taken in the retracted position of the pivoting device for storing the plate at the vehicle.

According to another preferred embodiment of the present invention, the foldable platform comprises guide pulleys for guiding the endless belt, said guide pulley being connected to the arm in a rotatable manner between the first pulley and the second pulley.

According to a preferred embodiment, the platform comprises a flap being connected to the arm pivotable about a pivot axis parallel to the rotation axis of the arm and being positioned vertically within the retracted position.

This flap can be, for example, a mudguard covering the wheel housing partially. In the retracted position, the plate is located directly above the wheel housing, the mudguard being located directly at the vehicle. When the foldable platform unfolds, the mudguard lies itself flat on the ground, the rigid arm carrying the plate being arranged above the mudguard.

Preferably the platform is positioned at the lateral portion of the vehicle, and the rotation axis of the arm is oriented in the driving direction of the vehicle.

According to a preferred embodiment of the present invention, the foldable platform is provided as a foldable step, wherein said plate is provided as a step plate. In this embodiment a person can step on the platform in its lowered unfolded position to reach a compartment located in a high position at a vehicle wall.

According to another preferred embodiment, the plate forms a bottom, a top wall or an upper lid of a container. In this case the container itself can be lowered together with the plate so that the access to the container is simplified.

In another embodiment the plate is provided with a suspension for holding a vehicle part, an equipment unit or a container suspended under the plate.

Preferably the foldable platform is equipped with a driving mechanism for turning the arm around its horizontal rotation axis.

More preferably the foldable platform comprises a dampening mechanism for dampening the turning movement of the arm when it approaches at least one of its end positions.

In the following the present invention will be explained with respect to the attached drawings, wherein:
- Fig. 1: is a schematic side view of a first embodiment of a foldable platform according to the present invention, shown in a retracted position;
- Fig. 2: shows the foldable platform of Fig. 1 in an intermediate position between the retracted position and an unfolded position;
- Fig. 3: is a schematic view of the foldable platform of Figs. 1 and 2, shown in a completely unfolded position;
- Fig. 4: shows a step plate of a second embodiment of a foldable platform according to the present invention in a tilted position;
- Fig. 5: shows the foldable platform of Fig. 4 in a horizontal position; and
- Fig. 6 to 10: are schematic views of a foldable platform according to a third embodiment of the present invention in different folding positions.

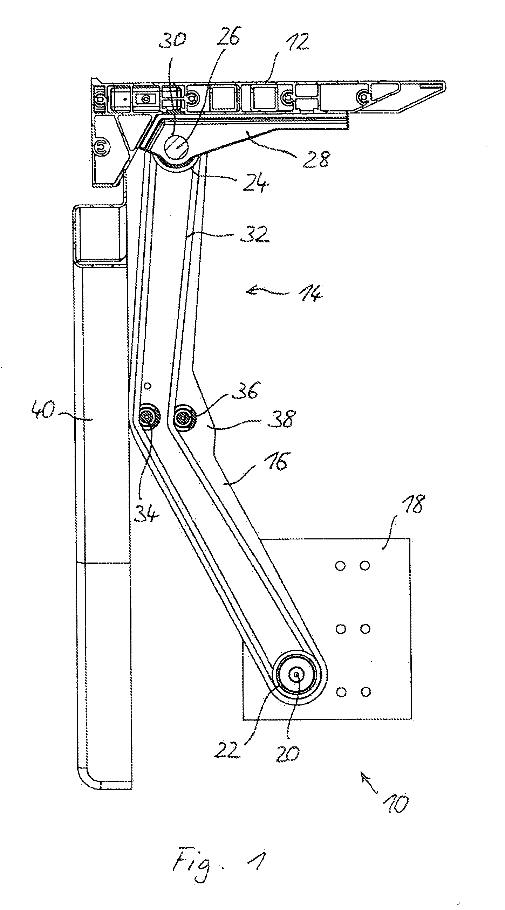

The foldable step 10 shown in Fig. 1 represents one embodiment of a foldable platform according to the present invention. It comprises a step plate 12 and a pivoting device 14 generally denoted by reference number 14 for pivoting the step plate between a retracted position, as shown in Fig. 1, to an unfolded position as shown in Fig.

3. This foldable step 10 is attached to a side portion of a vehicle, especially a rescue vehicle like a fire engine, and serves to enable the access to a compartment to store rescue equipment. For example said foldable step 10 can be attached at a lateral position of the vehicle where a locker for storing rescue equipment is located above a wheel housing of the vehicle, where the compartment is difficult to reach from the ground.

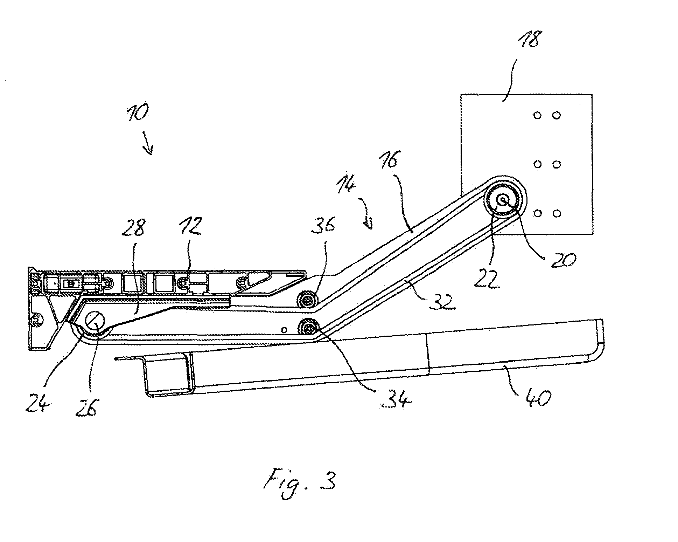

The pivoting device 14 comprises a rigid arm 16 that is hinged to a console 18 that forms a structural part of the vehicle. This hinged arrangement of the rigid arm 16 is formed by a rotation axis 20 that is fixed to the console 18 and stands vertically to the plane of the drawing in Fig. 1. The extension direction of this rotation axis 20 corresponds to the driving direction of the vehicle. The rigid arm 16 can be turned about this fixed horizontal rotation axis 20 between a generally upright position, as shown in Fig. 1, in a counter clockwise direction to reach a generally horizontal position depicted in Fig. 3. The arm 16 is operated by a suitable driving means that is not shown in the figures.

On the inside of the arm that can be viewed in Fig. 1, a first pulley 22 is fixed to the rotation axis 20 so that it is fixed with relation to the vehicle structure 18. When the arm 16 is turned about the rotation axis 20, the first pulley 22 keeps its rotation position, i.e., the arm 16 is rotated with respect to the first pulley 22.

At the free end of rigid arm 16, a second pulley 24 is attached to provide a connection between the rigid arm 16 and the step plate 12. This second pulley 24 is rotatable around a second rotation axis 26 at the free end of the rigid arm 16, said second rotation axis 26 being arranged parallel to the rotation axis 20 of the rigid arm 16. The second pulley 26 is fixed to a structural part 28 at the bottom of the step plate 12, i.e. it is fixed with respect to the step plate 12. To provide this fixed connection, the structural part 28 comprises a through hole 30 for receiving the second rotation axis 26. On the other hand the rotation axis 26 lies within a respective opening in the free end of the rigid arm 16 rotatable so that the second pulley 24 can be turned with respect to the rigid arm 16.

The pivoting device 14 further comprises an endless belt 32 that is conducted over the circumferential surfaces of the first pulley 22 and the second pulley 24. Between these pulleys 22 and 24, the endless belt 32 is guided by two guide pulleys 34,36 to follow the shape of the rigid arm 16. By means of the endless belt 32 a torque can be transmitted from the first pulley 22 to the second pulley 24.

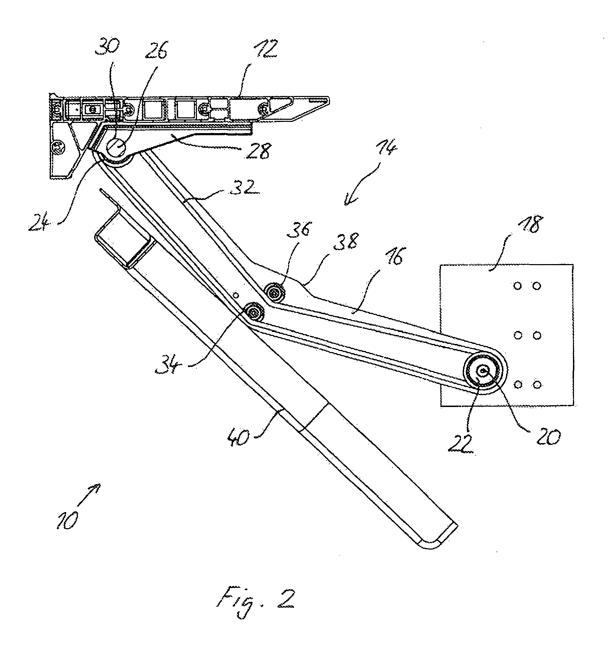

In this embodiment, the first pulley 22, the second pulley 24 and the endless belt 32 represent a mechanism to keep the horizontal position of the step plate 12 when the rigid arm 16 conducts a turning movement from the upright position in Fig. 1 to the unfolded position in Fig. 3. Because the first pulley 22 is fixed with respect to the vehicle structure 18 but turnable with respect to the rigid arm 16, it keeps its turning position when the rigid arm 16 is turned in the counter clockwise direction, as depicted in Fig. 2, while the endless belt 32 is moved with respect to the extension direction of the rigid arm 16, transmitting a torque to the second pulley 24 that is also turnable with respect to the free end of the rigid arm 16. With other words, the endless belt 32 couples the turning position of the second pulley 24 to the fixed turning position of the first pulley 22. As the second pulley 24 is connected to the step plate 12 in a fixed manner, the step plate 12 keeps its horizontal position in each turning position of the rigid arm 16. When the unfolded position in Fig. 3 is reached, the step plate 12 lies flat on an outer section of the rigid arm 16 so that the rigid arm supports the step plate 12, and a user can step on the step plate 12.

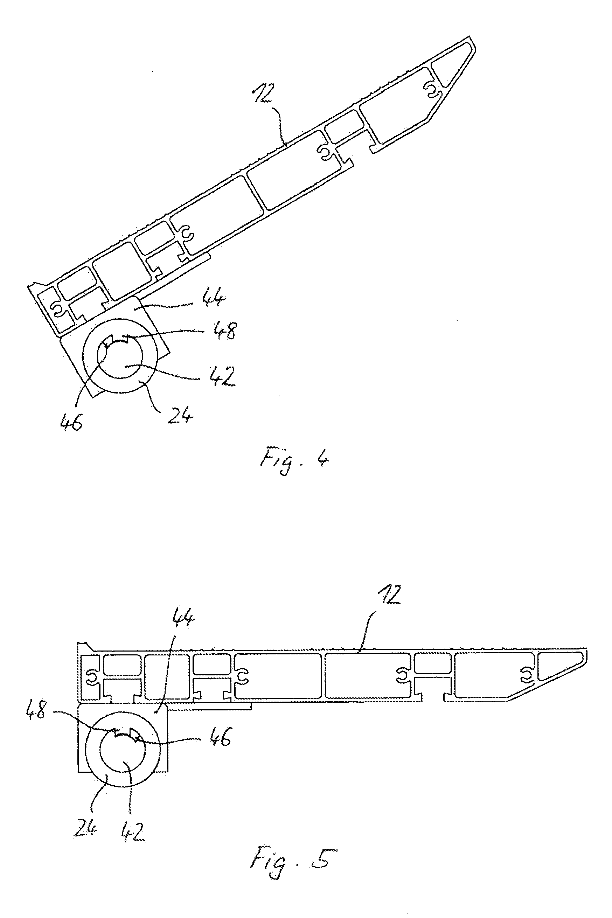

At an intermediate position of the rigid arm 16, where the rigid arm 16 comprises a sharp bent 38 and where the guide pulleys 34,36 are located, a flap 40 is hingedly attached to the outside of the rigid arm 16. This flap 40 can represent a mudguard of the wheel housing that covers the wheel housing partially in the retracted position of the foldable step 10. During the turning process of the rigid arm 16, the flap 40 lies flat on the ground to be positioned horizontally, while it is positioned vertically in the retracted state of the foldable step 10 in Fig. 1. In the foregoing embodiment, it has been stated that the second pulley 24 is connected to the step plate 12 in a fixed manner. In the second embodiment described in the following with respect to Figs. 4 and 5, the second pulley 24 can be turned with respect to the second rotation axis 26 at the free end of the rigid arm 16 within a certain limited angular range. In this embodiment the second rotation axis 26 is formed by a shaft body 42 that is formed integrally with a structural part 44 at the bottom of the step plate 12. When the shaft body 42 is turned around the second rotation axis, the step plate 12 performs a tilting movement between different positions shown in Figs. 4 and 5.

The shaft body 42 comprises a recess 46 its outer circumferential surface. On the other hand, the second pulley 24 comprises a spline 48 on its inner circumferential surface. The spline 48 lies within the recess 46. However, the recess 46 has a greater extension in the circumferential direction than the spline 48 so that the spline 48 can move between different angular positions within the recess 46. This angular clearance of the spline 48 within the recess 46 gives a certain degree of tilting the step plate 12 between the different tilting positions. In Figs. 4 and 5, the endless belt 32 is not shown. However, the mechanism for transmitting a torque from the first pulley 22 to the second pulley 24 is the same as in the first embodiment shown in Figs. 1 to 3, so that the second pulley 24 keeps its turning position during pivoting the rigid arm 16 to the outside. As shown in Figs. 4 and 5, a spline 48 keeps its position at the top of the second pulley 24 in all pivoting positions of the rigid arm 16. However, with respect to the second pulley 24, the step plate 12 can be tilted with respect to the turning position of the second pulley 24 because of the angular clearance of the spline 48 with respect to the recess 46. Fig. 4 shows a position in which the step plate 12 is tilted upwardly, which can be a storing position in the retracted state of the foldable step 10. When the rigid arm 16 is pivoted in the counter clockwise direction, as shown in Figs. 2 and 3, the step plate 12 can slip out of its compartment in the vehicle and fall into the horizontal position shown in Fig. 5 because of its own weight, as the center of gravity of the step plate 12 is displaced with respect to its rotation axis 26. The resulting horizontal position in Fig. 5 is limited by the outer end of the recess 46 so that the step plate 12 cannot be turned any further in the clockwise direction with respect to the second pulley 24.

It is clear from the above that the endless belt 32 can be replaced by any other suitable means to transmit a torque from the first pulley 22 to the second pulley 24, for example, by a chain, a tooth belt or the like.

Any suitable driving mechanism can be used for turning the arm 16 around its horizontal axis 20, like, for example, a motor with a shaft that is coupled to the axis 20 to be turnable in a clockwise or counterclockwise direction. Another example for a driving mechanism is a biased spring that may bias the arm 16 to be turned into the unfolded position. A dampening mechanism can be provided for dampening the turning movement of the arm 16 when it approaches one of the end positions, for example, the position in Fig. 3. Such a dampening means can also be represented by a mechanical spring, a gas pressure spring or the like.

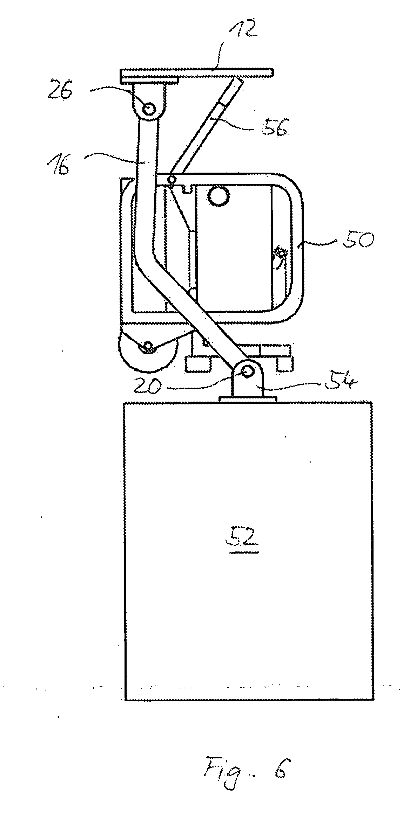

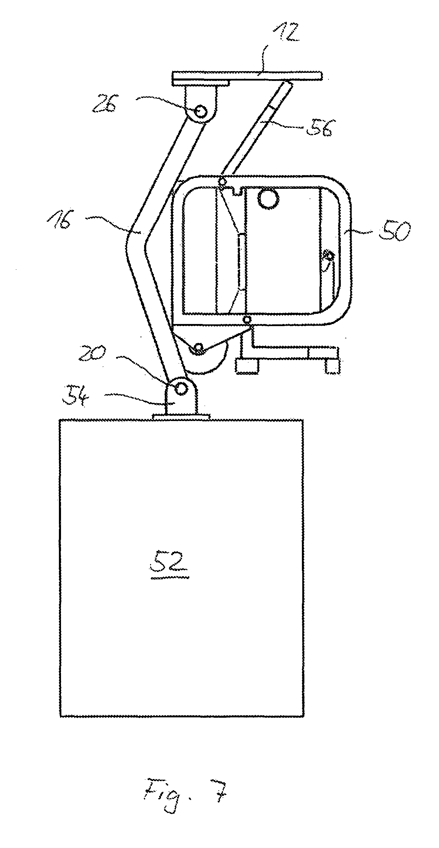

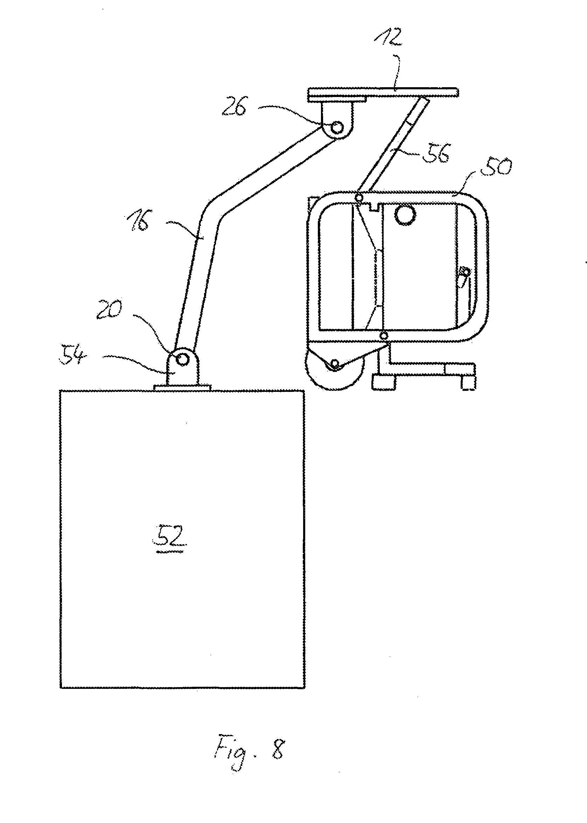

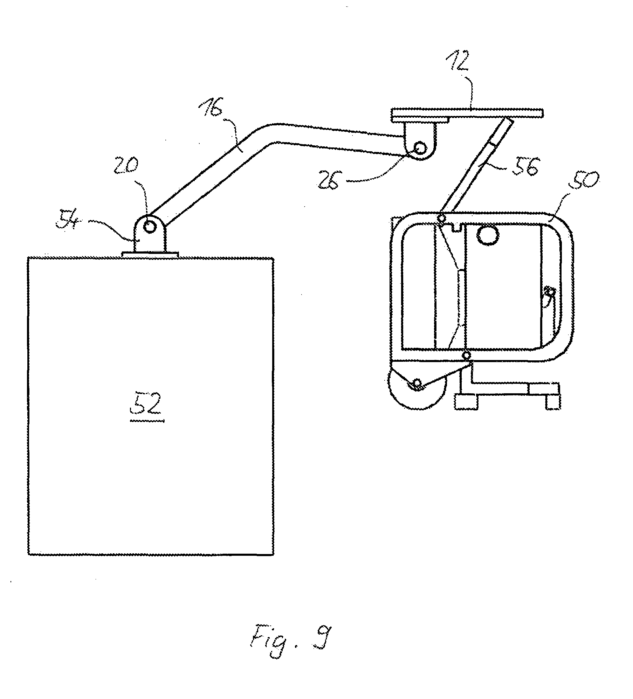

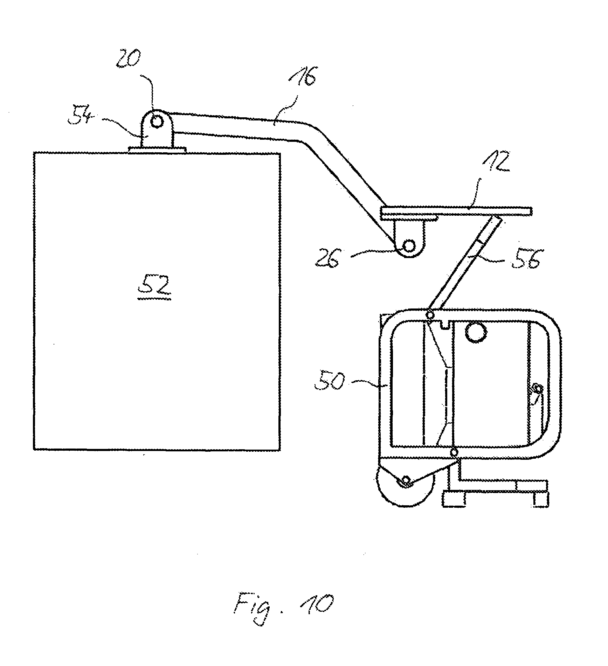

Fig. 6 shows an embodiment of a foldable platform according to the present invention that works as a suspension for holding a container 50. The pivoting device 14 is mounted on top of a wheel housing generally denoted by reference number 52, wherein the horizontal axis 20 is held in suspensions 54 that are fixed on the top of the wheel housing 52. The horizontal rotation axis 20 extends perpendicular to the plane of the drawing of Fig. 6, corresponding to the viewing direction. Around the rotation axis 20, the rigid arm 16 is turnable from the position in Fig. 6 in a clockwise direction to the position shown in Fig. 10. Intermediate positions are represented by Figs. 7, 8 and 9.

To the free end of the rigid arm 16, the plate 12 is hinged to keep a horizontal position independent from the tilting position of the arm 16, as can clearly be taken from Figs. 6 to 10. The mechanism to hold the plate 12 in this horizontal position is represented by the arrangement of the first pulley, a second pulley and the endless belt conducted over the first pulley and the second pulley, as shown in connection to the foregoing embodiments by means of the first pulley 22, the second pulley 24 on the rotation axis 26 and the endless belt 32 to connect them. That is, the first pulley (not shown in Figs. 6 to 10) is arranged on the horizontal axis 20 and fixed with relation to the vehicle structure represented by the wheel housing 52, while the second pulley is connected to the step plate being 12 rotatable about a second axis 26 of rotation parallel to the rotation axis 20 of the arm 16 at the free end of the arm 16 so that both pulleys are coupled with respect to their turning position even when the arm 16 is turned around the axis 20. This provides the effect of holding the plate 12, that is coupled to the second pulley 24, in its horizontal position.

Under the plate 12 the container 15 is suspended by means of a holder 56 that is connected with its upper end to the bottom of the plate 12 and with its lower end to the top of the container 50. The container 50 may be used for storing rescue equipment of the rescue vehicle in a storage position within the vehicle body. Fig. 6 represents a retracted position of the foldable step, keeping the container 50 in the storage position.

To provide an access to the container, the container 50 is moved out of its storage position to a position located out of the vehicle, shown in Fig. 10, the container 50 rests on the ground so that its contents is easily accessible. It can also be taken from the Figs. 6 to 10 that the container 50 keeps its orientation together with the plate 12 to which it is suspended. After accessing the container 50, it can be lifted again by turning the arm 16 around the rotation axis 20 in the counterclockwise direction to reach the position in Fig. 6 again.

Although the plate 12 in the embodiment described in connection with Figs. 6 to 10 as the function of suspending the container 50, it may not be limited to this function but can also serve as a stepping plate, as described before with the embodiments shown in Figs. 1 to 5. Moreover, the container 50 may be replaced by any other equipment unit, vehicle part or the like. As described before, a driving mechanism can be used to turn the arm 16 from the storing position in Fig. 6 to the lower position shown in Fig. 10 and back in the other direction. A dampening mechanism may help to avoid a sharp shock or impact to act on the container 50 when the arm 16 reaches the end position shown in Fig. 10, in which the container 50 contacts the ground. It is further possible to implement such a dampening mechanism into the holder 56.

In one further embodiment that is not shown in the figures, the plate 12 can represent the bottom or the top wall of the container 50 itself so that the holder 56 can be omitted.

## Claims

1. Foldable platform for vehicles, comprising a plate (12) and a pivoting device (14) for pivoting the plate (12) between a retracted position and an unfolded position,
**characterised in that** the pivoting device (14) comprises:
- a rigid arm (16) being hinged to a vehicle structure (18) and being turnable around a horizontal rotation axis (20), said rigid arm (16) comprising an outer section on which said step plate (12) lies flat when it reaches said unfolded position;
- a first pulley (22) being arranged on the rotation axis (20) of the arm (16) and being fixed with relation to the vehicle structure (18),
- a second pulley (24) being connected to the plate (12) and being rotatable around a second rotation axis (26) arranged parallel to said rotation axis (20) of the arm (16) at the free end of the arm (16),
- a endless belt (32) being conducted over the first pulley (22) and the second pulley (24).

2. Foldable platform according to claim 1, **characterised in that** said second pulley (24) is connected to the plate (12) in a fixed manner.

3. Foldable platform according to claim 1, **characterised in that** said second pulley (24) is connected to the plate (12) rotatable within a limited angular range.

4. Foldable platform according to claim 3, **characterised in that** said second pulley (24) is fitted onto a shaft body (42), said shaft body (42) being fixed to the plate (12) and comprising a recess (46) on its circumferential surface, said recess (46) receiving a spline (48) on an inner circumferential surface of the second pulley (24), said spline (48) having an angular clearance between different turning positions within said recess (46), said turning positions defining said angular range for turning the second pulley (24) with respect to the plate (12).

5. Foldable platform according to one of the preceding claims, **characterised by** guide pulleys (34,36) for guiding the endless belt (32), said guide pulleys (34,36) being connected to the arm (16) in a rotatable manner between the first pulley (22) and the second pulley (24).

6. Foldable platform according to one of the preceding claims, **characterised by** a flap (40) being connected to the arm (16) pivotable around a pivot axis parallel to the rotation axis (20) of the arm (16) and being positioned vertically in the retraced position.

7. Foldable platform according to one of the preceding claims, **characterised in that** said foldable platform is positioned at a lateral portion of the vehicle and that the rotation axis (20) of the arm (16) extends in the driving direction of the vehicle.

8. Foldable platform according to one of the preceding claims, **characterised in that** said foldable platform is provided as a foldable step (10), wherein said plate (12) is provided as a step plate.

9. Foldable platform according to one of the preceding claims, **characterised in that** said plate (12) forms a bottom, a top wall or an upper lid of a container.

10. Foldable platform according to one of the preceding claims, **characterised in that** said plate (12) is provided with a suspension for holding a vehicle part, an equipment unit or a container suspended under the plate (12).

11. Foldable platform according to one of the preceding claims, **characterised by** a driving mechanism for turning the arm (16) around its horizontal rotation axis (20).

12. Foldable platform according to one of the preceding claims, **characterised by** a dampening mechanism for dampening the turning movement of the arm (16) when it approaches at least one of its end positions.

## Patentansprüche

1. Klappbare Plattform für Fahrzeuge, umfassend eine Platte (12) und eine Schwenk-Vorrichtung (14) zum Schwenken der Platte (12) zwischen einer eingefahrenen Position und einer ausgefahrenen Position,
**dadurch gekennzeichnet, dass** die Schwenk-Vorrichtung (14) umfasst:
- einen starren Arm (16), der an einer Fahrzeug-Struktur (18) angelenkt ist und um eine horizontale Rotationsachse (20) drehbar ist, wobei der starre Arm (16) einen äußeren Abschnitt umfasst, an dem die Tritt-Platte (12) flach anliegt, wenn sie die ausgefahrene Position erreicht;
- eine erste Rolle (22), die an der Rotationsachse (20) des Arms (16) angeordnet ist und mit Bezug auf die Fahrzeug-Struktur (18) befestigt ist;
- eine zweite Rolle (24), die mit der Platte (12) verbunden ist und die drehbar um eine zweite Rotationsachse (26) parallel zu der Rotationsachse (20) des Arms (16) an dem freien Ende des Arms (16) angeordnet ist;
- ein Endlos-Riemen (32), der über die erste Rolle (22) und die zweite Rolle (24) geführt ist.

2. Klappbare Plattform nach Anspruch 1, **dadurch gekennzeichnet, dass** die zweite Rolle (24) mit der Platte (12) in fixierter Weise verbunden ist.

3. Klappbare Plattform nach Anspruch 1, **dadurch gekennzeichnet, dass** die zweite Rolle (24) mit der Platte (12) innerhalb eines begrenzten Winkelbereichs drehbar verbunden ist.

4. Klappbare Plattform nach Anspruch 3, **dadurch gekennzeichnet, dass** die zweite Rolle (24) auf einen Wellen-Körper (42) aufgesetzt ist, wobei der Wellen-Körper (42) an der Platte (12) fixiert ist und eine Kerbe (46) an seiner Umfangsfläche umfasst, wobei die Kerbe (46) einen Keil (48) an einer Innenumfangs-Fläche der zweiten Rolle (24) aufnimmt, wobei der Keil (48) einen abgewinkelten Spalt zwischen verschiedenen Dreh-Positionen innerhalb der Kerbe (46) aufweist, wobei die Dreh-Positionen den Winkel-Bereich zum Drehen der zweiten Rolle (24) in Bezug auf die Platte (12) definieren.

5. Klappbare Plattform nach einem der vorangehenden Ansprüche, **gekennzeichnet durch** Führungs-Rollen (34, 36) zum Führen des Endlos-Riemens (32), wobei die Führungs-Rollen (34, 36) mit dem Arm (16) in drehbarer Weise zwischen der ersten Rolle (22) und der zweiten Rolle (24) verbunden sind.

6. Klappbare Plattform nach einem der vorangehenden Ansprüche, **gekennzeichnet durch** eine Klappe (40), die mit dem Arm (16) schwenkbar um eine Drehachse parallel zur Drehachse (20) des Arms (16) verbunden ist und in der eingefahrenen Position vertikal positioniert ist.

7. Klappbare Plattform nach einem der vorangehenden Ansprüche, **dadurch gekennzeichnet, dass** die klappbare Plattform an einem Seiten-Teil des Fahrzeugs positioniert ist und dass sich die Drehachse (20) des Arms (16) in der Fahrtrichtung des Fahrzeugs erstreckt.

8. Klappbare Plattform nach einem der vorangehenden Ansprüche, **dadurch gekennzeichnet, dass** die klappbare Plattform vorgesehen ist als klappbare Stufe (10), wobei die Platte (12) als Tritt-Stufe vorgesehen ist.

9. Klappbare Plattform nach einem der vorangehenden Ansprüche, **dadurch gekennzeichnet, dass** die Platte (12) einen Boden, eine obere Wand oder einen oberen Deckel eines Behälters bildet.

10. Klappbare Plattform nach einem der vorangehenden Ansprüche, **dadurch gekennzeichnet, dass** die Platte (12) versehen ist mit einer Aufhängung zum Halten eines Fahrzeug-Teils, einer Geräte-Einheit oder eines unter der Platte (12) aufgehängten Behälters.

11. Klappbare Plattform nach einem der vorangehenden Ansprüche, **gekennzeichnet durch** einen Antriebs-Mechanismus zum Drehen des Arms (16) um seine horizontale Rotationsachse (20).

12. Klappbare Plattform nach einem der vorangehenden Ansprüche, **gekennzeichnet durch** einen Dämpfungs-Mechanismus zum Dämpfen der Dreh-Bewegung des Arms (16), wenn er sich wenigstens einer seiner End-Positionen annähert.

## Revendications

1. Plateforme pliable pour des véhicules, comprenant une plaque (12) et un dispositif de pivotement (14) pour le pivotement de la plaque (12) entre une position rétractée et une position dépliée,
**caractérisée en ce que** le dispositif de pivotement (14) comprend :
- un bras rigide (16) articulé à une structure de véhicule (18) et apte à tourner autour d'un axe de rotation horizontal (20), ledit bras rigide (16) comprenant une section extérieure sur laquelle plaque de marche (12) repose lorsqu'elle atteint ladite position dépliée ;
- une première poulie (22) agencée sur l'axe de rotation (20) du bras (16) et fixée relativement à la structure de véhicule (18),
- une deuxième poulie (24) connectée à la plaque (12) et apte à tourner autour d'un deuxième axe de rotation (26) agencé d'une manière parallèle audit axe de rotation (20) du bras (16) à l'extrémité libre du bras (16),
- une courroie sans fin (32) guidée sur la première poulie (22) et la deuxième poulie (24).

2. Plateforme pliable selon la revendication 1, **caractérisée en ce que** ladite deuxième poulie (24) est connectée à la plaque (12) d'une manière fixe.

3. Plateforme pliable selon la revendication 1, **caractérisée en ce que** ladite deuxième poulie (24) est connectée à la plaque (12) d'une manière tournante dans une plage angulaire limitée.

4. Plateforme pliable selon la revendication 3, **caractérisée en ce que** ladite deuxième poulie (24) est ajustée sur un corps d'arbre (42), ledit corps d'arbre (42) étant fixé à la plaque (12) et comprenant un évidement (46) sur sa surface circonférentielle, ledit évidement (46) recevant une cannelure (48) sur une surface circonférentielle intérieure de la deuxième poulie (24), ladite cannelure (48) ayant un jeu angulaire entre différentes positions de rotation dans ledit évidement (46), lesdites positions de rotation définissant ladite plage angulaire pour faire tourner la deuxième poulie (24) par rapport à la plaque (12).

5. Plateforme pliable selon l'une des revendications précédentes, **caractérisée par** des poulies de guidage (34, 36) pour guider la courroie sans fin (32), lesdites poulies de guidage (34, 36) étant connectées au bras (16) d'une manière tournante entre la première poulie (22) et la deuxième poulie (24).

6. Plateforme pliable selon l'une des revendications précédentes, **caractérisée en ce qu'**un volet (40) est connecté au bras (16) d'une manière pivotante autour d'un axe de pivotement parallèle à l'axe de rotation (20) du bras (16) et positionné verticalement dans la position rétractée.

7. Plateforme pliable selon l'une des revendications précédentes, **caractérisée en ce que** ladite plateforme pliante est positionnée à une portion latérale du véhicule, et **en ce que** l'axe de rotation (20) du bras (16) s'étend dans le sens de la marche du véhicule.

8. Plateforme pliable selon l'une des revendications précédentes, **caractérisée en ce que** ladite plateforme pliable est réalisée comme une marche pliable (10), où ladite plaque (12) est réalisée comme un marchepied.

9. Plateforme pliable selon l'une des revendications précédentes, **caractérisée en ce que** ladite plaque (12) forme un fond, une paroi de dessus ou un couvercle supérieur d'un contenant.

10. Plateforme pliable selon l'une des revendications précédentes, **caractérisée en ce que** ladite plaque (12) est munie d'une suspension pour retenir une pièce du véhicule, une unité d'équipement ou un contenant suspendu sous la plaque (12).

11. Plateforme pliable selon l'une des revendications précédentes, **caractérisée par** un mécanisme d'entraînement pour faire tourner le bras (16) autour de son axe de rotation horizontal (20).

12. Plateforme pliable selon l'une des revendications précédentes, **caractérisée par** un mécanisme d'amortissement pour amortir le mouvement de rotation du bras (16) lorsqu'il approche au moins une de ses positions d'extrémité.
